(19) Europäisches Patentamt

European Patent Office

Office européen des brevets

(11) **EP 2 755 768 B1**

(12) **EUROPEAN PATENT SPECIFICATION**

(45) Date of publication and mention
of the grant of the patent:
**06.01.2016 Bulletin 2016/01**

(51) Int Cl.:
***B04B 5/12*** *(2006.01)*     ***B04B 9/00*** *(2006.01)*
***B04B 9/12*** *(2006.01)*

(21) Application number: **12753435.2**

(86) International application number:
**PCT/EP2012/065675**

(22) Date of filing: **10.08.2012**

(87) International publication number:
**WO 2013/037576 (21.03.2013 Gazette 2013/12)**

(54) **APPARATUS FOR CENTRIFUGAL SEPARATION**

VORRICHTUNG FÜR ZENTRIFUGALTRENNUNG

APPAREIL POUR SÉPARATION CENTRIFUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2011 SE 1150826**

(43) Date of publication of application:
**23.07.2014 Bulletin 2014/30**

(73) Proprietor: **3Nine AB
131 27 Nacka Strand (SE)**

(72) Inventors:
- **CLAES, Inge
  13172 Nacka (SE)**
- **FRANZÉN, Peter
  12476 Bandhagen (SE)**

(74) Representative: **Fenix Legal KB
Stureplan 4C, 4 tr
114 35 Stockholm (SE)**

(56) References cited:
**WO-A1-01/36103**     **WO-A1-02/20118**
**WO-A1-2007/001232**

## Description

## Technical Field

The invention relates to an apparatus for cleaning a flow of gas from solid and/or liquid particles therein by means of centrifugal separation, comprising a rotatable rotor in a surrounding, stationary casing and having a plurality of adjacent surface elements with an inner surface facing the center axis of the rotor onto which surface particles in said gas flow can be trapped by centrifugal forces during the radial passage of the gas flow between the surface elements, said surface elements of the rotor delimiting at least one axial flow shaft in the central portion of the rotor which communicates with the flow passages between the surface elements and with an opening in the rotor for the gas flow through a first wall of the casing, said casing delimiting a collection chamber for particles separated in the rotor and having an opening for the gas flow through a related wall of the casing and an outlet for the discharge of particles collected in the casing, and a drive shaft extending through a second passage in a second wall opposite to said first wall of the casing, as well as a second end rotatably supported in a cantilevered manner and carrying a pulley on the outside of the casing.

## Background of the invention

In belt-driven centrifugal separators of this kind, wherein the rotor is supported in a cantilevered manner at one of its ends and is subjected to a force component normal to the rotor axis generated by the radial force onto the pulley below the rotor suspension, the other, free end of the rotor shaft, which extends through a passage of the stationary casing, is caused to move in the direction of the force by shearing action. Furthermore, the free rotor end makes a tilting motion such that the rotor axis no longer is upright. Such shearing and tilting motions of the top of the rotor are undesired, since this would necessitate a widening of the passage in the upper portion of the casing in order to avoid a collision between the free, rotating rotor end and the stationary casing. This will cause the gap between the rotor and the casing to be undesirably large, thereby resulting in a greater leakage of the gas flow from the inlet to the outlet in the casing. An apparatus according to the preamble of claim 1 is known from WO 02/20118 A1.

## Summary of the invention

It is a primary object of the present invention to minimize the passage gap between the rotor and the casing during operation so that such a leakage will become as small as possible. This requires that the free end of the rotor does not perform any lateral movement when a radial force is exerted on the drive pulley at the bearing-supported end of the rotor.

For this purpose the apparatus set forth in the introduction is, according to the invention, characterized in that said rotor has a first end extending through a first passage in said first wall, and in that the drive shaft is supported in a surrounding, non-rotatable bearing sleeve which is resiliently connected to the stationary casing by means of at least one elastic member configured to counteract shearing and tilting movements of the supported end of the drive shaft during operation in such a manner that the first end of the rotor situated at the first passage has a substantially fixed position relative to the first passage. Thereby, the leakage gap between the rotor and the casing is minimized.

Preferably, the elastic member is configured as an annular, cylindrical spring element which simultaneously forms a sealing element between the bearing sleeve and the second wall of the stationary casing. This will minimize the number of components necessary for fixating the position of the free end of the rotor and to seal the other passage of the rotor.

In order to achieve said desired properties of the rotor suspension the cylindrical element is configured with the following conditions as to the stiffness of the member:

$$k_a/k_{st}=H_rH_t,$$

where

$k_a$ is the tilting stiffness, $k_{st}$ the shearing stiffness, $H_r$ the axial distance between the point of action of the radial force F onto the pulley and the point of fixation of the cylindrical element to the bearing sleeve, and $H_t$ is the axial distance between the fixation of the cylindrical element to the bearing sleeve and the end of the rotor at the first passage, and the elastic member is dimensioned according to the following condition:

$$4H_rH_t=3\beta(r_y^2+r_i^2),$$

where

$\beta$ is a geometrical constant of the cylindrical spring element, $r_y$ the outer radius of the cylindrical element, and $r_i$ the inner radius of the cylindrical element.

Preferably, the cylindrical element has the shape of an annular rubber element.

According to an optional embodiment of the apparatus of the invention a plurality of separate elastic members, such as rubber bodies or helical springs, are evenly distributed circumferentially about the bearing sleeve. In such cases there is a separate annular sealing element which closes the space between the bearing sleeve and the casing.

The bearing sleeve extends through the second passage in the second wall of the casing, while the elastic member joins the casing to a radial flange of the bearing sleeve. The radial flange is located either at an inwardly protruding end of the bearing sleeve or at an end thereof located outside the casing.

Alternately, the elastic member can join an axial, cylindrical portion of the bearing sleeve to an axial, cylindrical portion of the casing.

The apparatus of the invention can be configured to operate both in a co-current flow and a counter-current flow mode, in which cases the inlets and outlets of the various versions are reversed.

The present invention will be described more in detail below with reference to the accompanying drawings.

**Brief description of the drawings**

Fig. 1 illustrates schematically a first embodiment of a belt-driven centrifugal separator having a cantilevered, resilient suspension of the rotor according to the invention in a stand still condition;

Fig. 2 exaggeratedly illustrates the position of the rotor and its suspension relative to the casing of the separator during operation;

Fig. 3 illustrates another embodiment of an apparatus of the invention having six separate elastic suspension members;

Fig. 4 is a cross-section through the six elastic members in Fig. 3;

Fig. 5 illustrates an apparatus similar to that in Fig. 1 but with a reversed flow direction of the gas (co-current separation); and

Figs. 6 and 7 illustrate schematically two optional locations of the elastic members.

**Detailed description of preferred embodiments of the inventions**

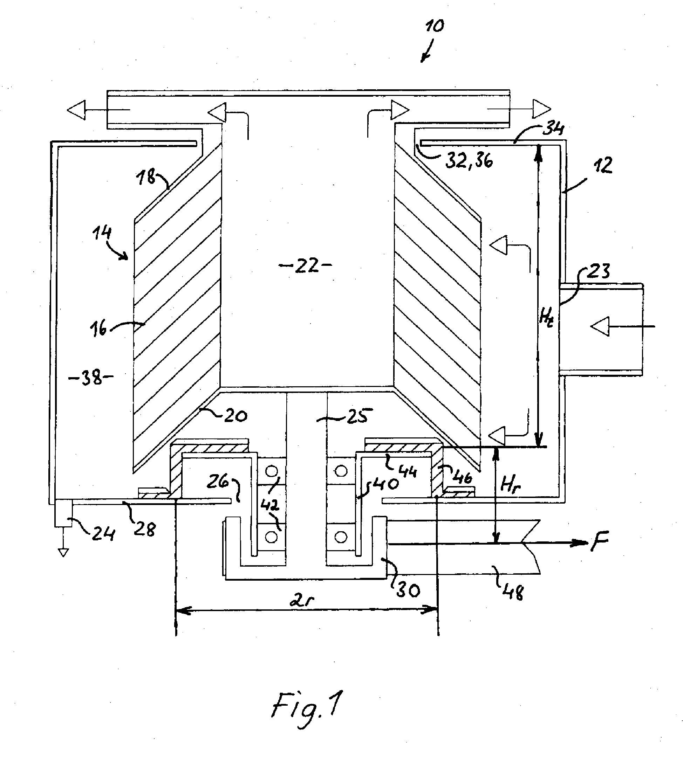

In Fig. 1 a belt-driven centrifugal separator of the invention for cleaning a gas flow from solid and/or liquid particles therein is generally denoted 10.

The separator 10 comprises a stationary casing 12 and a rotor 14 rotatably supported therein. The rotor 14 is, in a manner known per se, formed by a stack of a great number of conical surface elements 16 located at a small mutual axial distance to form narrow flow passages for the gas to be cleaned. The surface elements 16 are held together by an upper and a lower end plate 18 and 20, respectively, and delimit a central flow shaft 22, in the example shown an outlet shaft for the gas flow cleaned by counter-current separation through the rotor. The casing 12 has an inlet opening 23 for the gas to be cleaned, and an outlet 24 for separated particles. The rotor 14 has a drive shaft 25 extending through a passage 26 in a lower wall 28 of the casing 12 and carries a pulley 30 at its lower end. The upper end of the rotor 14 extends through a passage 32 in the upper wall 34 with the smallest gap 36 possible so as to minimize leakage from the collection chamber 38 to the environment. The rotor 14 is rotatably journalled in the casing only at the lower one of its ends, i.e. a cantilever suspension. The drive shaft 25 of the rotor 14 is here journalled in a surrounding, non-rotatable bearing sleeve 40 by means of two bearings 42. In the embodiment of Fig. 1 the bearing sleeve 40 extends through the passage 26 in the wall 28 and is, on an radially extending flange 44, resiliently attached to the inside of the lower wall 28 of the stationary casing 12 by means of annular elastic element 46 of e.g. a suitable rubber mixture.

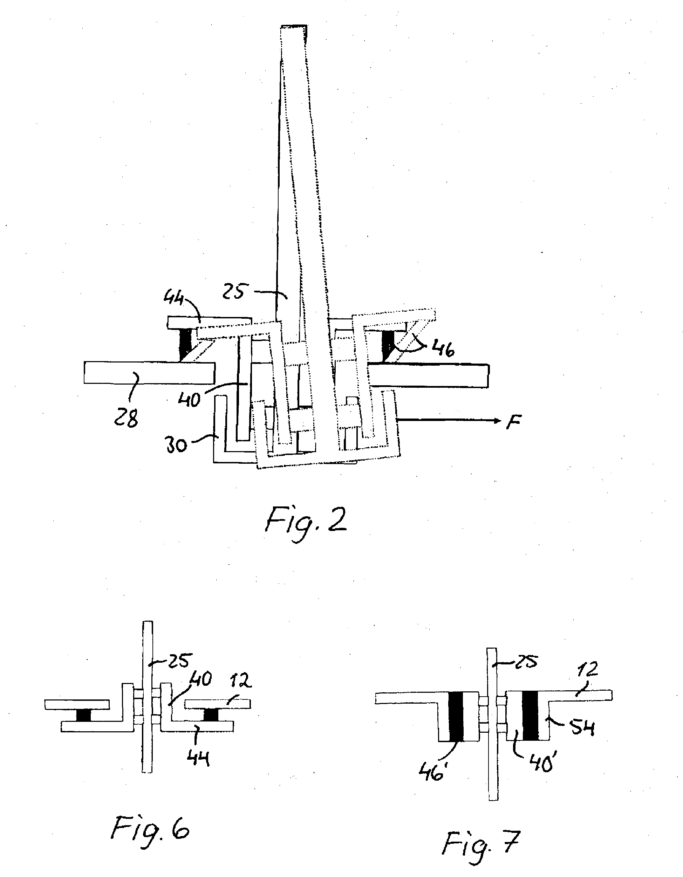

During operation of the apparatus, i.e. during rotation of the rotor 12, a drive belt 48 exerts a pulling force F on the pulley 30 and the rotor shaft 25. Due to this, the rotor shaft 25 normally tends to incline in such a manner through shearing and tilting that the lower end of the rotor is displaced to the right in Fig. 1, whereas its upper end is displaced somewhat linearly to the right, which means that the gap 36 between the top of the rotor and the passage 32 in the upper wall 34 of the casing 12 has to be larger to avoid collision of the rapidly rotating rotor 14 with the stationary casing 12. In avoiding such a collision by widening the gap 36 would on the other hand result in an undesired leakage of gas from the collection chamber 38 in the casing 12. Therefore, according to the invention, it is suggested to arrange the elastic member 46 between the bearing sleeve 40 and the casing 12 in such a manner that the upper end of the rotor 14 at the rotor passage 32 is substantially in a fixed position relative to the passage 32, as schematically and somewhat exaggeratedly shown in Fig. 2, i.e. such that the upper end of the rotor at the passage 32 is not displaced laterally during operation.

As shown in Fig. 1, the elastic member 46 is suitably configured as an annular cylindrical spring element, which may simultaneously form a sealing member between the bearing sleeve 40 and the lower wall 28 of the stationary casing 12, such that unclean gas in the collection chamber 38 is prevented from being discharged through the lower passage 26 in the casing wall 28.

In order to achieve the desired goal of having a rotor top not being moved laterally during operation following conditions as to the stiffness of the elastic member 46 are suggested:

$$k_a/k_{st}=H_rH_t,$$

where

$k_a$ is the tilting stiffness, $k_{st}$ the shearing stiffness, $H_r$ is the axial distance between the point of action of the radial force F onto the pulley 30 and the point of fixation of the cylindrical spring element 46 to the bearing sleeve 40, and $H_t$ is the axial distance between the fixation of the cylindrical spring element 46 to the bearing sleeve 40 and the passage, and the elastic member 46 is dimensioned according to the following condition:

$$4H_rH_t=3\beta(r_y^2+r_i^2),$$

where

$\beta$ is a geometrical constant of the cylindrical spring element 46, $r_y$ the outer radius of the cylindrical element 46, and $r_i$ the inner radius of the cylindrical element 46.

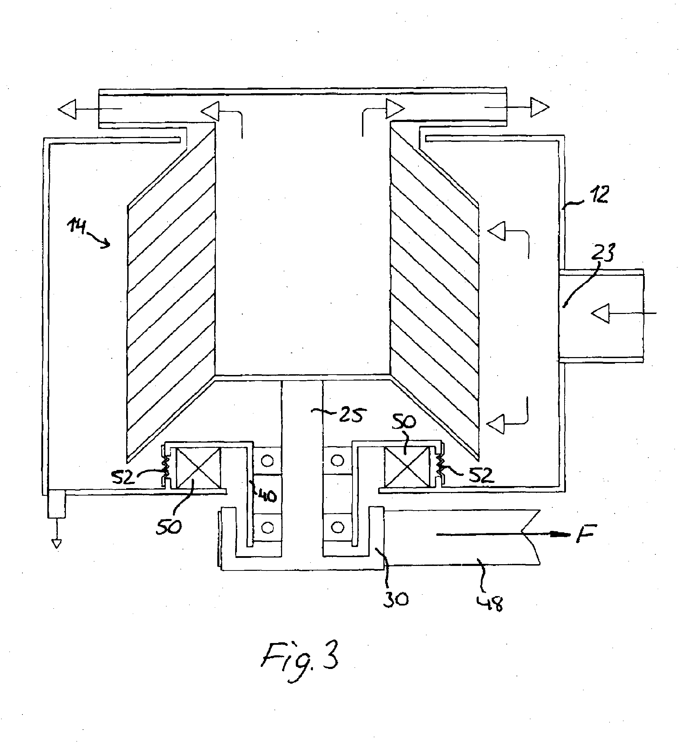

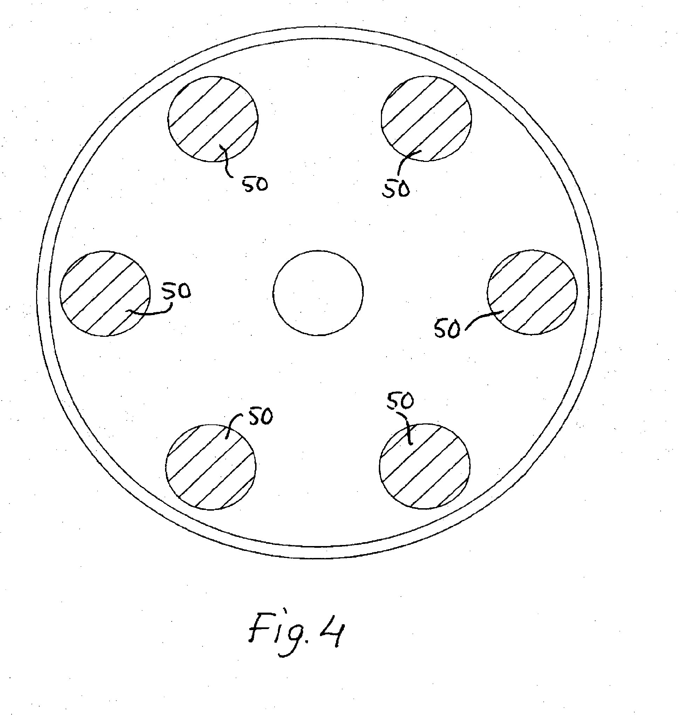

Instead of having a cylindrical, annular shape of the elastic member, a plurality of separate spring elements 50 may, in an optional embodiment of the apparatus of the invention shown in Fig. 3, be arranged evenly spaced circumferentially between the bearing sleeve 40 and the lower wall 28 of the casing. This is shown more clearly in the plan view of Fig. 4. In this case a separate sealing ring 52 is required so as to prevent leakage to the environment. Following condition should be fulfilled in this embodiment:

$$2H_rH_t/r^2=k_k/k_s,$$

where

$H_r$ is the axial distance between the point of action of the radial force F onto the pulley 30 and the point of fixation of the separate spring elements 50 to the bearing sleeve 40, $H_t$ is the axial distance between the fixation of the elastic members 50 to the bearing sleeve 40 and the passage, r is the radius on which the individual elastic members are located, $k_k$ is the spring constant of the individual elastic members 50 in a compressed state, and $k_s$ is the spring constant of the individual elastic members 50 in a sheared state.

The separate spring elements 50 suitably consist of rubber but could also consist of helix springs (not shown).

In the embodiment of Fig. 1 the radial flange 44 of the bearing sleeve 40 attached to the elastic member 46 is located on inside of the casing 12, whereas optionally the flange 44 is located on the outside of the casing 12, such as shown in Fig. 6. It is also conceivable, such as shown schematically in Fig. 7, that the bearing sleeve 40' extends through the lower passage of the casing 12, in which case the elastic member 46' connects an axial, cylindrical portion of the bearing sleeve 40' to an axial, cylindrical portion 54 of the casing 12.

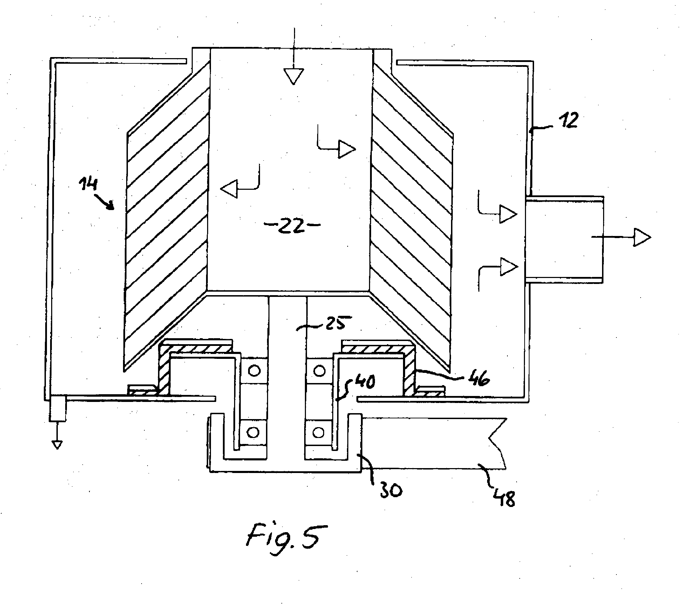

Fig. 5 illustrates an apparatus similar to that of Fig. 1, but here the flow of gas is reversed, i.e. the gas inlet and outlet are reversed, where the separator is operating in a co-current mode.

## Claims

1. Apparatus for cleaning a flow of gas from solid and/or liquid particles therein by means of centrifugal separation, comprising a rotatable rotor (14) in a surrounding, stationary casing (12) and having a plurality of adjacent surface elements (16) with an inner surface facing the center axis of the rotor onto which surface particles in said gas flow can be trapped by centrifugal forces during the radial passage of the gas flow between the surface elements (16), said surface elements (16) of the rotor (14) delimiting at least one axial flow shaft (22) in the central portion of the rotor (14) which communicates with the flow passages between the surface elements (16) and with an opening in the rotor for the gas flow through a first wall (34) of the casing (12), said casing delimiting a collection chamber (38) for particles separated in the rotor and having an opening (23) for the gas flow through a related wall of the casing and an outlet (24) for the discharge of particles collected in the casing, and a drive shaft (25) extending through a second passage (26) in a second wall (28) opposite to said first wall (34) of the casing (12), as well as a second end rotatably supported in a cantilevered manner and carrying a pulley (30) on the outside of the casing, **characterized in that** said rotor (14) having a first end extending through a first passage (32) in said first wall (34), and **in that** the drive shaft (25) is supported in a surrounding, non-rotatable bearing sleeve (40) which is resiliently connected to the stationary casing (12) by means of at least one elastic member (46; 46'; 50) configured to counteract shearing and tilting movements of the supported end of the drive shaft (25) during operation in such a manner that the first end of the rotor situated at the first passage (32) has a substantially fixed position relative to the first passage (32).

2. Apparatus according to claim 1, **characterized in that** the elastic member (46; 46') is configured as an annular cylindrical spring element which simultaneously forms a sealing element between the bearing sleeve (40) and the second wall (28) of the stationary casing (12).

3. Apparatus according to claim 2, **characterized in that** the cylindrical element (46; 46') is configured with the following conditions as to the stiffness of the member:

$$k_a/k_{st}=H_rH_t,$$

where

$k_a$ is the tilting stiffness, $k_{st}$ is the shearing stiffness, $H_r$ is the axial distance between the point of action of the radial force F onto the pulley (30) and the point of fixation of the cylindrical spring element to the bearing sleeve (40), and $H_t$ is the axial distance between the fixation of the cylindrical spring element (46; 46') to the bearing sleeve (40) and the end of the rotor (14) at the first passage (32), and the elastic member (46; 46') is dimensioned according to the following condition:

$$4H_rH_t=3\beta(r_y^2+r_i^2),$$

where
$\beta$ is a geometrical constant of the cylindrical spring element, $r_y$ the outer radius of the cylindrical element, and $r_i$ the inner radius of the cylindrical element.

4. Apparatus according to claim 2 or 3, **characterized in that** the cylindrical element (46; 46') is made of rubber.

5. Apparatus according to claim 1, **characterized in that** a plurality of separate elastic members (50) are distributed circumferentially about the bearing sleeve (40).

6. Apparatus according to claim 5, **characterized by** the following condition of the separate elastic members (50): $2H_rH_t/r^2=k_k/k_s$, where $H_r$ is the axial distance between the point of action of the radial force F onto the pulley (30) and the point of fixation of the separate elastic members (50) to the bearing sleeve (40), $H_t$ is the axial distance between the fixation of the elastic members (50) to the bearing sleeve (40) and the end of the rotor (14) located at the first passage (32), r is the radius on which the individual elastic members are located, $k_k$ is the spring constant of the individual elastic members in a compressed state, and $k_s$ is the spring constant of the individual elastic members in a sheared state.

7. Apparatus according to claim 6, **characterized in that** the elastic members (50) consist of rubber bodies.

8. Apparatus according to claim 6, **characterized in that** the elastic members consist of helix springs.

9. Apparatus according to any one of claims 6-8, **characterized in that** at least one annular sealing element (52) closes the gap between the bearing sleeve (40) and the casing.

10. Apparatus according to any one of claims 1-9, **characterized in that** the bearing sleeve (40) extends through the second passage (26) in the second wall (28) of the casing (12), wherein the elastic member (46; 46') connects the casing to a radial flange (44) of the bearing sleeve (40).

11. Apparatus according to claim 10, **characterized in that** the radial flange (44) is located at an end of the bearing sleeve (40) extending into the casing.

12. Apparatus according to claim 10, **characterized in that** the radial flange (44) is located at an end of the bearing sleeve (40) located outside of the casing.

**Patentansprüche**

1. Vorrichtung zur Reinigen eines Gasstroms aus festen und/oder flüssigen Partikeln darin mittels Zentrifugaltrennung, mit einem drehbaren Rotor (14) in einer umgebenden stationären Gehäuse (12) und mit einer Vielzahl von benachbarten Flächenelementen (16), die eine die Mittelachse des Rotors zugewandten Innenseite aufweisen, auf der Partikeln in dem Gasstrom während der radiale Durchgang des Gasstroms zwischen den Flächenelementen (16) durch Zentrifugalkräfte aufgefangen können, wobei die Flächenelemente (16) des Rotors (14) mindestens einen axialen Strömungsschacht (22) in dem zentralen Teil des Rotors (14) abgrenzen, der mit den Strömungsdurchgängen zwischen den Flächenelementen (16) und mit einer Öffnung in dem Rotor für den Gasstrom durch ein erstes Wand (34) des Gehäuses (12) kommuniziert, wobei das Gehäuse eine Sammelkammer (38) für im Rotor abgetrennte Partikel abgrenzt und einen Öffnung (23) für den Gasstrom durch eine zugehörige Wand des Gehäuses sowie einen Auslass (24) für den Austritt von in dem Gehäuse gesammelten Partikel aufweist, und eine Antriebswelle (25), die sich durch einen zweiten Durchgang (26) in einer der erste Wand (34) entgegengesetzte zweiten Wand (28) des Gehäuses (12) erstreckt, sowie einen zweite Ende, der in der Art eines Auslegers drehbar in das Gehäuse gestützt ist und eine Riemenscheibe (30) auf der Außenseite des Gehäuses trägt, **dadurch gekennzeichnet, dass** der Rotor (14) ein erstes Ende hat, das sich durch einen ersten Durchgang (32) des ersten Wand (34) erstreckt, und dass die Antriebswelle (25) in einem umgebenden, nicht drehbaren Lagerhülse (40) gelagert ist, die federnd an dem stationären Gehäuse (12) durch mindestens ein elastisches Element (46'; 50; 46) verbunden ist, das ausgeformt ist, Scherund Kippbewegungen des gelagerten Endes der Antriebswelle (25) während des Betriebs so entgegenzuwirken, dass das erste an dem ersten Durchgang (32) gelegene Ende des Rotors eine im Wesentlichen feste Position relativ zu dem ersten Durchgang (32) hat.

2. Vorrichtung nach Anspruch 1, **dadurch gekennzeichnet, dass** das elastische Element (46; 46') in Form eines ringförmigen zylindrischen Federelement, das zugleich eine Dichtelement zwischen der Lagerhülse (40) und der zweiten Wand (28) des stationären Gehäuses (12) bildet, ausgebildet ist.

3. Vorrichtung nach Anspruch 2, **dadurch gekennzeichnet, dass** das zylindrische Element (46; 46') mit den folgenden Bedingungen, um die Steifigkeit des Elements konfiguriert ist:

$$k_a/k_{st}=H_rH_t,$$

wobei

$k_a$ die Kippsteifigkeit ist, $k_{st}$ die Schersteifigkeit ist, $H_r$ der axiale Abstand zwischen dem Angriffspunkt der Radialkraft F auf die Scheibe (30) und dem Punkt der Befestigung des zylindrischen Federelement an der Lagerhülse (40) ist, und $H_t$ der axiale Abstand zwischen der Befestigung des zylindrischen Federelement (46; 46') mit der Lagerhülse (40) und dem Ende des Rotors (14) an dem ersten Durchgang (32) ist, und wobei das elastische Element (46; 46') gemäß der folgenden Bedingung dimensioniert ist:

$$4H_rH_t=3ß\,(r_y^2+r_i^2),$$

wobei
ß eine geometrische Konstante des zylindrischen Federelements ist, ry den Außenradius des zylindrischen Elements ist, und $r_i$ den Innenradius des zylindrischen Elements ist.

4. Vorrichtung nach Anspruch 2 oder 3, **dadurch gekennzeichnet, dass** das zylindrische Element (46; 46') aus Gummi hergestellt ist.

5. Vorrichtung nach Anspruch 1, **dadurch gekennzeichnet, dass** eine Vielzahl von getrennten elastischen Elemente (50) umfangsmäßig um die Lagerhülse (40) verteilt sind.

6. Vorrichtung nach Anspruch 5, **gekennzeichnet durch** folgende Bedingung für den getrennten elastischen Elemente (50): $2H_rH_t/r^2 =k_k/k_s$, wobei $H_r$ der axiale Abstand zwischen dem Angriffspunkt der Radialkraft F auf die Scheibe (30) und der Punkt der Befestigung der getrennten elastischen Elemente (50) an der Lagerhülse (40) ist $H_t$ der axiale Abstand zwischen der Fixierung der elastischen Elemente (50) an der Lagerhülse (40) und dem Ende des Rotors (14) an dem ersten Durchgang (32) ist, r der Radius, auf dem die einzelnen elastischen Elemente angeordnet ist, $k_k$ die Federkonstante der elastischen Einzelelemente in einem komprimierten Zustand ist, und $k_s$ die Federkonstante der einzelnen elastischen Elemente in einem gescherten Zustand ist.

7. Vorrichtung nach Anspruch 6, **dadurch gekennzeichnet, dass** die elastischen Elemente (50) aus Gummikörper bestehen.

8. Vorrichtung nach Anspruch 6, **dadurch gekennzeichnet, dass** die elastischen Elemente aus Schraubenfedern bestehen.

9. Vorrichtung nach einem der Ansprüche 6-8, **dadurch gekennzeichnet, dass** mindestens ein ringförmiges Dichtungselement (52) schließt die Lücke zwischen der Lagerhülse (40) und das Gehäuse.

10. Vorrichtung nach einem der Ansprüche 1-9, **dadurch gekennzeichnet, dass** die Lagerhülse (40) erstreckt sich durch den zweiten Durchgang (26) in der zweiten Wand (28) des Gehäuses (12), wobei das elastische Element (46; 46') das Gehäuse an einem radialen Flansch (44) der Lagerhülse (40) verbindet.

11. Vorrichtung nach Anspruch 10, **dadurch gekennzeichnet, dass** der radiale Flansch (44) an einem in das Gehäuse erstreckenden Ende der Lagerhülse (40) angeordnet ist.

12. Vorrichtung nach Anspruch 10, **dadurch gekennzeichnet, dass** der radiale Flansch (44) an einem Ende der Lagerhülse (40) außerhalb des Gehäuses angeordnet ist.

**Revendications**

1. Appareil pour nettoyer un flux de gaz des particules solides et/ou liquides contenues à l'intérieur de ce dernier, au moyen de la séparation centrifuge, comprenant un rotor rotatif (14) dans un carter fixe périphérique (12) et ayant une pluralité d'éléments de surface (16) adjacents avec une surface interne faisant face à l'axe central du rotor sur lequel les particules superficielles dudit flux de gaz peuvent être piégées par les forces centrifuges pendant le passage radial du flux de gaz entre les éléments de surfaces (16), lesdits éléments de surface (16) du rotor (14) délimitant au moins un arbre à écoulement axial (22) dans la partie centrale du rotor (14) qui communique avec les passages d'écoulement entre les éléments de surface (16) et avec une ouverture dans le rotor pour le flux de gaz à travers une première paroi (34) du carter (12), ledit carter délimitant une chambre de collecte (38) pour les particules séparées dans le rotor et ayant une ouverture (23) pour le flux de gaz à travers une paroi relative du carter et une sortie (24) pour la décharge des particules collectées dans le carter, et un arbre d'entraînement (25) s'étendant à travers un second passage (26) dans une seconde paroi (28) opposée à ladite première paroi (34) du carter (12), ainsi qu'une seconde extrémité supportée en rotation, en porte-à-faux et portant une poulie (30) à l'extérieur du carter, **caractérisé en ce que** ledit rotor (14) a une première extrémité s'étendant à travers un premier passage (32) dans ladite première paroi (34), et **en ce que** l'arbre d'entraînement (25) est supporté dans un manchon de palier non rotatif périphérique (40) qui est raccordé de manière élastique au carter fixe (12) au moyen d'au moins un élément élastique (46 ; 46' ; 50) configuré pour s'opposer aux mouvements de cisaillement et d'inclinaison de l'extrémité supportée de l'arbre d'entraînement (25) pendant le fonctionnement, de sorte que la première extrémité du rotor située au niveau du premier passage (32) a une position sensiblement fixe par rapport au premier passage (32).

2. Appareil selon la revendication 1, **caractérisé en ce que** l'élément élastique (46 ; 46') est configuré comme un élément de ressort cylindrique annulaire qui forme simultanément un élément d'étanchéité entre le manchon de palier (40) et la seconde paroi (28) du carter fixe (12).

3. Appareil selon la revendication 2, **caractérisé en ce que** l'élément cylindrique (46 ; 46') est configuré avec les conditions suivantes concernant la rigidité de l'élément :

$$k_\alpha / k_{st} = H_r H_t,$$

où

$k_\alpha$ est la rigidité à l'inclinaison $k_{st}$ est la rigidité au cisaillement, $H_r$ est la distance axiale entre le point d'action de la force radiale F sur la poulie (30) et le point de fixation de l'élément de ressort cylindrique sur le manchon de palier (40), et $H_t$ est la distance axiale entre la fixation de l'élément de ressort cylindrique (46 ; 46') sur le manchon de palier (40) et l'extrémité du rotor (14) au niveau du premier passage (32), et l'élément élastique (46 ; 46') est dimensionné selon la condition suivante :

$$4H_r H_t = 3\beta (r_y^2 + r_i^2),$$

où
$\beta$ est une constante géométrique de l'élément de ressort cylindrique, ry le rayon externe de l'élément cylindre, et $r_i$ le rayon interne de l'élément cylindrique.

4. Appareil selon la revendication 2 ou 3, **caractérisé en ce que** l'élément cylindrique (46 ; 46') est réalisé à partir de caoutchouc.

5. Appareil selon la revendication 1, **caractérisé en ce qu'**une pluralité d'éléments élastiques séparés (50) sont répartis de manière circonférentielle autour du manchon du palier (40).

6. Appareil selon la revendication 5, **caractérisé par** la condition suivante des éléments élastiques séparés (50) : $2H_r H_t / r^2 = k_k / k_s$, où $H_r$ est la distance axiale entre le point d'action de la force radiale F sur la poulie (30) et le point de fixation des éléments élastiques séparés (50) sur le manchon de palier (40), $H_t$ est la distance axiale entre la fixation des éléments élastiques (50) sur le manchon de palier (40) et l'extrémité du rotor (14) positionnée au niveau du premier passage (32), r est le rayon sur lequel les éléments élastiques individuels sont positionnés, $k_k$ est la constante de rappel des éléments élastiques individuels dans un état comprimé, et $k_s$ est la constante de rappel des éléments élastiques individuels dans un état cisaillé.

7. Appareil selon la revendication 6, **caractérisé en ce que** les éléments élastiques (50) se composent de corps en caoutchouc.

8. Appareil selon la revendication 6, **caractérisé en ce que** les éléments élastiques se composent de ressorts hélicoïdaux.

9. Appareil selon l'une quelconque des revendications 6 à 8, **caractérisé en ce qu'**au moins un élément d'étanchéité annulaire (52) ferme l'espace entre le manchon de palier (40) et le carter.

10. Appareil selon l'une quelconque des revendications 1 à 9, **caractérisé en ce que** le manchon de palier (40) s'étend à travers le second passage (26) dans la seconde paroi (28) du carter (12), dans lequel l'élément élastique (46 ; 46') raccorde le carter à une bride radiale (44) du manchon de palier (40).

11. Appareil selon la revendication 10, **caractérisé en ce que** la bride radiale (44) est positionnée au niveau d'une extrémité du manchon de palier (40) s'étendant dans le carter.

12. Appareil selon la revendication 10, **caractérisé en ce que** la bride radiale (44) est positionnée au niveau d'une extrémité du manchon du palier (40) positionné à l'extérieur du carter.

*Fig.1*

Fig. 2

Fig. 6

Fig. 7

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0220118 A1